(19) Europäisches Patentamt
European Patent Office
Office européen des brevets

(11) EP 1 038 664 A2

(12) **EUROPEAN PATENT APPLICATION**

(43) Date of publication:
**27.09.2000 Bulletin 2000/39**

(51) Int. Cl.7: **B32B 27/34**, B32B 1/08, C08L 77/00, F16L 11/04

(21) Application number: **00302241.5**

(22) Date of filing: **20.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **24.03.1999 JP 7987599**

(71) Applicant:
**Tokai Rubber Industries, Ltd.**
**Komaki-shi, Aichi-ken, 485-8550 (JP)**

(72) Inventors:
- **Katayama, Kazutaka**
  **Komaki-shi, Aichi-ken 485-0029 (JP)**
- **Ito, Hiroaki**
  **Kasugai-shi, Aichi-ken 487-0035 (JP)**
- **Iio, Shinji**
  **Inazawa-shi, Aichi-ken 492-8017 (JP)**

(74) Representative:
**Horner, Martin Grenville et al**
**Cruikshank & Fairweather**
**19 Royal Exchange Square**
**Glasgow G1 3AE Scotland (GB)**

(54) **Conductive resin tube and conductive polyamide resin composition**

(57) A conductive polyamide resin composition including 6 to 15 phr of conductive carbon black and 0.3 to 5 phr of a coupling agent has excellent conductivity and resistance to sour gasoline, thereby being useful as an inner tube material for a tube.

EP 1 038 664 A2

## Description

### FIELD OF THE INVENTION

The present invention relates to a conductive resin composition including a polyamide as a base and to a molded body using or working at the resin composition. More specifically, the present invention relates to a conductive resin composition including a polyamide as a base, and to a tube using the same. The conductive resin composition is improved in resistance to sour gasoline (oxygenated gasoline), and exhibits a good balance in physical properties such as resistance to fuel oils, antistatic properties, elongation and flexibility, thereby being useful as an inner tube material for a tube.

### BACKGROUND OF THE INVENTION

Resin materials with a conductivity are used in a very wide range of fields, for example, antistatic molded products, surface heating elements, CV cables (cross-linked polyethylene insulated vinyl sheathed cables) , conductive coatings, conductive inks, IC (integrated circuit) packaging materials and electromagnetic wave shielding materials. Resin tubes with conductivity are also utilized upon transporting fuels in order to remove static electricity generated by friction during the transportation.

The most generally conducted means to impart conductivity to a resin is a method of adding to a resin a carbonaceous material such as carbon black (Japanese Patent Application Laid-open No. Hei 7-286103 and Japanese Examined Patent Application No. Hei 8-13902). It is well known that the method can also be applied to a polyamide resin and that a conductive polyamide resin is obtained by blending a conductive carbon black with a polyamide resin. However, mixing a conductive carbon black therewith markedly deteriorates resistance of the resulting composition against sour gasoline, which makes the composition weak against cracks when it is bent. Thus, there are difficulties in using a polyamide resin mixed with a conductive carbon black as a tube for fuel.

### SUMMARY OF THE INVENTION

The present invention has been made in view of the above, and therefore has an object thereof to provide a polyamide resin composition having excellent conductivity and resistance to sour gasoline.

Another object of the present invention is to provide a molded body using or working at the composition.

As the result of intensive studies on resistance to sour gasoline by a conductive polyamide resin having a conductive carbon black blended therewith, the inventors of the present invention have found that the above-described properties are markedly improved by blending as an additive a coupling agent with a polyamide resin, and thus completed the present invention.

The present invention provides the following conductive polyamide resin compositions and tubes using the same.

(1) A single-layer or multi-layer conductive (the term "conductive" means "electroconductive" in this specification and attached claims ) resin tube, wherein at least the innermost layer of the said tube is formed from a conductive polyamide composition comprising 100 phr of a polyamide resin, 6 to 15 phr of conductive carbon black and 0.3 to 5 phr of a coupling agent (the unit "phr" means "parts per hundred parts of resin").

(2) The conductive resin tube as described in the above (1) , wherein the tube is for the transport of fuels.

(3) A conductive resin tube structure having a protective member formed from rubbers or thermoplastic elastomers arranged on part or the whole of an outer periphery of the tube, wherein at least the innermost layer of the said tube is formed from a conductive polyamide composition comprising 100 phr of a polyamide resin, 6 to 15 phr of conductive carbon black and 0.3 to 5 phr of a coupling agent.

(4) A conductive polyamide resin composition comprising 100 phr of a polyamide resin, 6 to 15 phr of conductive carbon black and 0.3 to 5 phr of a coupling agent.

(5) A molded product (the term "molded" means "formed in a certain shape by molding, extruding and the like method" in this specification and attached claims) comprising the conductive polyamide resin composition as described in the above (4).

### DETAILED DESCRIPTION OF THE INVENTION

(I) Resin composition

The conductive resin composition of the present invention comprises as essential components a polyamide

resin, conductive carbon black and a coupling agent, and may optionally include other components. Each component for the conductive resin composition is described in detail below.

(a) Polyamide

Various kinds of polyamide can be used in the conductive resin composition of the present invention. Examples of the polyamide include polymers of ε-caprolactam (i.e., 6-hexanelactam), 6-aminocaproic acid, ω-enantholactam, 7-aminoheptanoic acid, 9-aminononanoic acid, 11-aminoundecanoic acid, ω-laurolactam, 12-aminododecanoic acid, α-pyrrolidone and α-piperidone; polymers obtained by polycondensation of diamines (e.g., hexamethylene diamine, nonamethylene diamine, undecamethylene diamine, dodecamethylene diamine, meta-xylylene diamine or 1,4-bis(aminomethyl)cyclohexane) and dicarboxylic acids (e.g., terephthalic acid, isophthalic acid, adipic acid, sebacic acid, dodecanoic diacid or cyclohexane dicarboxylic acid); and copolymers comprising at least two of monomers described above. A mixture of those (co)polymers can also be used.

In addition, copolymers comprising those (co)polymer components and the above-described copolymer that contains polyamide chain can also be used. Examples of those copolymers include elastomers such as polyether amides or polyester amides, which are copolymers with a soft segment such as polycaprolacton or polytetramethylene glycol.

Of those polyamides, polyamides mainly comprising aliphatic chain, having good flexibility and gasoline impermeability, that is, nylon is preferable. Nylon 11, nylon 12 or a polyamide comprising those monomers (11-aminoundecanoic acid, 12-aminododecanoic acid) as main components, each having excellent balance in flexibility, gasoline impermeability and impact resistance and showing small change in physical properties by moisture absorption, is particularly suitably used.

Number average molecular weight of the polyamide is preferably 10,000 or higher from the viewpoint of impact resistance and processability.

(b) Conductive carbon black

In general, it is considered to be essential conditions for conductive carbon black that its structure is highly developed, impurities are small in number on particle surface and specific surface area is large. Conductive carbon black preferably used in the present invention is one of which DBP (dibutyl phthalate) oil absorption measured according to JIS K6221 (1970) is preferably 300 ml/100g or larger, and specific surface area measured by BET method ($N_2$) is preferably 500 $m^2/g$ or larger. If the DBP oil absorption or specific surface area is fallen outside the above-described range, sufficient conductivity may not be obtained.

Examples of the conductive carbon black that can be used in the present invention include commercially available Ketchen black EC (trade name) and Ketchen black EC600JD (trade name), products of Akzo, Netherlands.

The conductive carbon black is used in the polyamide resin composition of the present invention in an amount of 6 to 15 phr. If the amount of the conductive carbon black used is less than 6 phr, conductivity is not stabilized. On the other hand, if the amount is larger than 15 phr, the conductivity is stabilized, but surface of a tube molding markedly deteriorates. The amount of the conductive carbon black to be added is preferably 7 to 13 phr.

(c) Coupling agent

In the present invention, the coupling agent is added to improve resistance to sour gasoline of the conductive polyamide resin.

Examples of the coupling agent that can be used in the present invention include silane coupling agents, titanate coupling agents and aluminum coupling agents. The respective coupling agents are specifically described below. However, it should be noted that those are representative examples, and the coupling agents that can be used in the present invention are not limited thereto.

(i) Silane coupling agents

Silane coupling agents are not particularly limited, but compounds represented by the following formula are preferably used.

$$Y\text{-}Si\text{-}(R_1)_m(R_2)_{3\text{-}m}$$

wherein Y represents,

$H_2C=CH-$ , 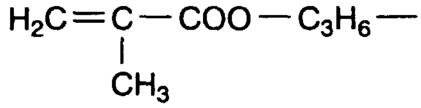 ,

$H_2N-CONH-C_3H_6-$ , 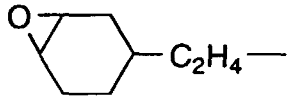 ,

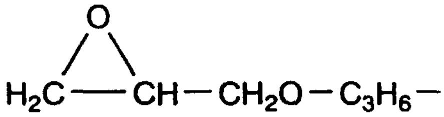 , $HS-C_3H_6-$ ,

$Cl-C_3H_6-$ or $H_2N-C_3H_6-$

and $R_1$ represents a lower alkyl group, $R_2$ represents chlorine, methoxy group, ethoxy group or methoxyethoxy group and m is 0 or 1.

Specific examples of the silane coupling agents include vinyltrichlorosilane, vinyltrimethoxysilane, vinyltriethoxysilane, vinyl tris(β-methoxyethoxy)silane, β-(3,4-epoxycyclohexyl)ethyl trimethoxysilane, γ-glycidoxypropyl trimethoxysilane, γ-glycidoxypropylmethyl diethoxysilane, γ-glycidoxypropyl triethoxysilane, γ-methacryloxypropylmethyl dimethoxysilane, γ-methacryloxypropyl trimethoxysilane, γ-methacryloxypropylmethyl diethoxysilane, γ-methacryloxypropyl triethoxysilane, N-β-(aminoethyl)-γ-aminopropylmethyl dimethoxysilane, N-β-(aminoethyl)-γ-aminopropyl trimethoxysilane, N-β-(aminoethyl)-γ-aminopropyl triethoxysilane, γ-aminopropyl trimethoxysilane, γ-aminopropyl triethoxysilane, N-phenyl-γ-aminopropyl trimethoxysilane, γ-chloropropyl trimethoxysilane, γ-mercaptopropyl trimethoxysilane and γ-ureidopropyl triethoxysilane. Those can be used alone or as mixtures of two or more thereof.

Of those, β-(3,4-epoxycyclohexyl)ethyl trimethoxysilane, γ-glycidoxypropyl trimethoxysilane, γ-glycidoxypropylmethyl diethoxysilane, γ-glycidoxypropyl triethoxysilane, γ-methacryloxypropyl trimethoxysilane, N-β-(aminoethyl)-γ-aminopropylmethyl dimethoxysilane, N-β-(aminoethyl)-γ-aminopropyl trimethoxysilane, N-β-(aminoethyl)-γ-aminopropyl triethoxysilane, γ-aminopropyl trimethoxysilane, γ-aminopropyl triethoxysilane and γ-mercaptopropyl trimethoxysilane can preferably be used.

(ii) Titanate coupling agents

Titanate coupling agents are not particularly limited, and conventional titanate coupling agents are used. Specific examples of the titanate coupling agents include isopropyltrioctanoyl titanate, isopropyltriisostearoyl titanate, isopropyldimethacrylisostearoyl titanate, isopropylisostearoyldiacryl titanate, isopropyltri(N-aminoethylaminoethyl)titanate, isopropyltri(dioctylphosphate)titanate, isopropyltris(dioctylpyrophosphate)titanate, isopropyltridodecylbenzenesulfonyl titanate, isopropyltricumylphenyl titanate, tetraisopropylbis(dioctylphosphite)titanate, tetraoctylbis(ditridecylphosphite)titanate, tetra(2,2-diallyloxymethyl-1-butyl)bis(ditridecyl)phosphite titanate, bis(dioctylpyrophosphate)oxyacetate titanate and bis(dioctylpyrophosphate)ethylene titanate. Those can be used alone or as a mixture of two or more thereof. Of those, isopropyltris(dioctylpyrophosphate)titanate and isopropyltridodecylbenzenesulfonyl titanate are preferably used.

(iii) Aluminum coupling agents

Compounds represented by the following formula can be used as the aluminum coupling agents.

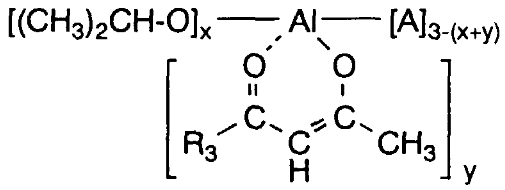

wherein $R_3$ represents an alkoxy group having 1 to 22 carbon atoms or an alkylamino group having 1 to 22 carbon atoms, the alkyl group in the group may be linear or branched chain, A represents

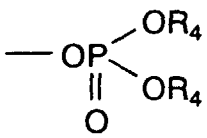 , 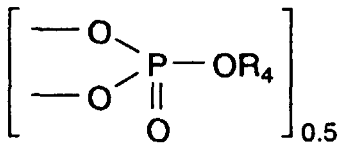 or 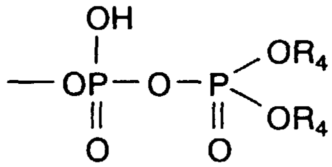

$R_4$ presents an alkyl group having 1 to 18 carbon atoms, and x and y each are 1 or 2, provided that x and y are not simultaneously 2.

The amount of the coupling agent added to the composition of the present invention is 0.3 to 5 phr. If the amount of the coupling agent added is less than 0.3 phr, the effect of resistance to sour gasoline is small, and on the other hand, if it is more than 5 phr, melt viscosity of the composition increases remarkably, which are not preferable. The preferred amount of the coupling agent added is 0.5 to 3 phr.

Where the coupling agent used is liquid, the coupling agent is added to the polyamide in a manner such that the liquid coupling agent is previously adsorbed on a carrier, the coupling agent thus adsorbed is pulverized and such coupling agent powder can be added. Use of such a powdered coupling agent can improve the handling property, and also can be dry blended together with the polyamide and the conductive carbon black, whereby dispersibility of the coupling agent upon melting the composition is improved.

Powdering of the coupling agent can be carried out by supporting the coupling agent on a powder-like carrier. As the carrier, there may be employed a powder, such as calcium silicate or silica, having an average particle size of 15mμ to 30mμ. The amount of the coupling agent to be supported is about 50 to 80% by weight. Further, commercially available products in which the coupling agent is supported on calcium silicate, such as Silanogram M (a product of KETTLITZ, purity: 50%) or HARWICK DSC-18 (a product of HARWICK, purity: 72%) can be used.

Further, even in the case where the coupling agent is a liquid state, it can be added and kneaded using, for example, a twin screw extruder having a barrel for liquid pump.

(d) Other components

The polyamide composition of the present invention may optionally contain, in order to improve its flexibility, a plasticizer such as an aromatic sulfonamide type plasticizer or a p-hydroxybenzoic acid type plasticizer, or a rubber component such as an acrylonitrile-butadiene rubber (NBR), a hydrogenated NBR, maleinated ethylene-propylene rubber (EPR), or maleinated ethylene-propylene-diene rubber (EPDM). Further, antioxidant may be mixed therewith in order to reduce deterioration by kneading and to improve resistance to aging by heat.

The polyamide composition of the present invention can be produced by melt kneading the polyamide (a), the conductive carbon black (b), the coupling agent (c) and, if necessary, other components as described above. The melt kneading method can employ conventional various methods. A kneading method using a twin screw extruder, KCK (registered trademark) kneader or the like is preferable.

(II) Molded product

The conductive polyamide resin of the present invention can be subjected to various moldings and processings as well as ordinary polyamide resin. Examples of the molding and processing include injection molding, extrusion molding, blow molding, compression molding, rotational molding, cast molding, and moldings and processings by powder processing, solution coating, jointing, mechanical processing or the like. The shape of the molded product is not limited, and can be any shape such as a tube, a sheet or the like. The purposes of use of the molded product are, for example, antistatic molded products, face heating elements, CV cables, conductive coatings, conductive inks, IC packaging materials and electromagnetic wave shielding materials. Because the conductive polyamide resin of the present invention has excellent flexibility and resistance to fuel oils, it is useful as a tube material that is used for transportation of hydrocarbon-based fluids such as gasoline or light oil.

Therefore, according to the present invention, there is provided a resin tube having excellent flexibility and resistance to sour gasoline. Such a tube can be formed with a conventional extruder.

Further, according to the present invention, there is provided a multi-layer fuel tube in which at least two layers of such a tube are used as the innermost layer for the purpose of removing static electricity generated by a charged fluid, mainly fuel oil. The structure and size of the tube vary depending on the purpose of use. For example, in a tube for supplying a fuel from a gasoline or light oil tank in vehicles, a layer having a thickness of about 0.05 to 0.6 mm of the resin composition of the present invention is generally arranged as an inner layer, and an outer layer having a thickness of about 0.4 to 0.95 mm is arranged on the outside of the inner layer. Of course, the thickness of each layer, particularly the outer layer, is optionally variable.

Materials that can be used for the outer layer are various polyamides, epichlorohydrin rubbers, NBR, mixtures of NBR and polyvinyl chloride, chlorosulfonated polyethylene rubbers, chlorinated polyethylene rubbers, acrylic rubbers (ACM), chloroprene rubbers (CR), ethylene-propylene rubbers (EPR), ethylene-propylene-diene rubbers (EPDM), rubber mixtures of NBR and EPDM (NE), and vinyl chloride-, olefin-, ester- or amide-based thermoplastic elastomers. The same kind of polyamides or rubbers can be used for the outer layer or an intermediate layer, considering adhesion with the innermost layer. If necessary, the resin layer of the present invention may further be arranged between the intermediate layer and the outermost layer. Alternately, the innermost layer and the outermost layer may be composed of resin layers according to the present invention, and a strength imparting material may be used for the intermediate layer.

Such a multi-layer tube may be produced by the conventional way such as multi-layer extrusion at once, or by producing the tube of the present invention and then forming other material layer on the outer periphery by extrusion coating. Thereafter, the rubber may be vulcanized, if necessary.

In consideration of stone splash (jumping stone), friction with other parts and flame resistance, a solid or sponge-like protector comprising ethylene-propylene rubbers or vinyl chloride-or olefin-based thermoplastic elastomers can be arranged on the whole or part of the outer periphery of the multi-layer tube thus formed. The protector may be formed into a sponge-like porous material by the conventional method. Such a porous material can form a protective portion having light weight and excellent heat insulating property. In addition, material cost can be decreased. Alternately, glass fibers or the like may be added to improve strength of the protector. The shape of the protector is not particularly limited. However, the protector is generally a cylindrical member or a block member having depressions for receiving the multi-layer tube. In the case of the cylindrical member, the combination of the multi-layer tube and the protector can be formed by previously preparing the cylindrical member and then inserting the multi-layer tube therein, or by extruding the cylindrical member on the multi-layer tube and adhering those. The multi-layer tube and the protector can be adhered by, if necessary, applying an adhesive to the inner surface of the protector or the depression surface, inserting or fitting the multi-layer tube in the protector and adhering those. As a result, a structure having the multi-layer tube and the protector that are integrally bonded is formed.

BEST MODE FOR CARRYING OUT THE INVENTION

The present invention is described in more detail by referring to the following Examples and Comparative Examples.

Materials and test methods used in the Examples and Comparative Examples are as follows.

(I) Material

(a) Polyamide:
(a-1) Nylon 11

RILSAN BESN O P40TL (manufactured by Elf AtoChem)
RILSAN BESN O TL (non-plasticizing) (manufactured by Elf AtoChem)

(a-2) Nylon 12

RILSAN AESN O P40TL (manufactured by Elf AtoChem) RILSAN AESN O TL (non-plasticizing) (manufactured by Elf AtoChem)

(b) Conductive carbon black:
(b-1) Ketchen black EC (manufactured by Akzo)

Specific surface area: 1000 $m^2$/g; oil absorption: 350 ml/100g

(b-2) Ketchen black EC600JD (manufactured by Akzo)

Specific surface area: 1270 $m^2$/g; oil absorption: 495 ml/100g

(c) Coupling agent:
(c-1) Silane coupling agent-A: γ-(methacryloxypropyl)trimethoxysilane (containing 50% of calcium silicate having an average particle size of 15mμ to 30mμ)
(c-2) Silane coupling agent-B: a mixture of γ-mercaptopropyl trimethoxysilane and γ-chloropropyl trimethoxysilane (containing 50% of calcium silicate having an average particle size of 15mμ to 30mμ)
(c-3) Silane coupling agent-C: aminopropyl triethoxysilane (containing 50% of calcium silicate having an average particle size of 15mμ to 30mμ)
(c-4) Silane coupling agent-D: γ-ureidopropyl triethoxysilane (containing 50% of calcium silicate having an average particle size of 15mμ to 30mμ)
(c-5) Silane coupling agent-E: vinyltris(β-methoxyethoxy)silane
(c-6) Silane coupling agent-F: β-(3,4-epoxycyclohexyl)ethyl trimethoxysilane
(c-7) Silane coupling agent-G: N-β-(aminoethyl)-γ-aminopropyl trimethoxysilane
(c-8) Titanate coupling agent-H: isopropyltris(dioctylpyrophosphate)titanate
(c-9) Titanate coupling agent-I: tetra(2,2-diallyloxymethyl-1-butyl)bis(ditridecyl)phosphite titanate
(c-10) Aluminum coupling agent-J: acetoalkoxyaluminum diisopropylate
(c-11) Silane coupling agent-K: aminopropyl triethoxysilane
(d) Aromatic sulfonamide-based plasticizer:

BMB: n-butylbenzenesulfonamide

(e) Antioxidant: aromatic secondary amine : p-(p-toluenesulfonyl amide)-diphenylamine (Nocrac TD, manufactured by Ouchi Shinko Chemical Industries Co., Ltd.)

(II) Test method

(1) Surface resistance (GM213 method)

A copper-made column having a diameter 0.1 mm larger than the inner diameter d of a tube was inserted to both edges of a sample having a length of L molded into a tube form at a depth of a, and resistance value R between the two columns was measured. Surface resistance Rs was calculated by the following equation:

$$Rs(\Omega/sq)=R \cdot \pi d/(L-2a)$$

(ii) Elongation at break

A sheet having a thickness of 1 mm was formed with an injection molding machine. ASTM D-638 type IV test piece was formed by punching the sheet, and the elongation at break was measured.

(iii) Resistance to sour gasoline

A sheet having a thickness of 1 mm was formed with an injection molding machine. ASTM D-638 type IV test piece was formed by punching the sheet. The test piece was dipped in a model sour gasoline [test fuel oil C containing 5 wt% of lauroyl peroxide (JIS K6258), Fuel C (toluene 50 vol% + isooctane 50 vol%)] at 60°C for 168 hours, and elongation at break was then measured. Further, the presence or absence of cracks at dumbbell edge portion was also visually confirmed.

EXAMPLES 1 TO 4

Coupling agents (c-1) to (c-4) that were impregnated with calcium silicate and then powdered, and conductive carbon black in the proportions as shown in Table 1 were introduced into a twin screw extruder (manufactured by Kobe Steel co.) from the same barrel, and those were kneaded with a polyamide. The resulting mixture was extruded to obtain pellets.

Using a two layer tube extruder, a two layer tube was prepared, in which the polyamide/conductive carbon black/coupling agent composition obtained above was used to form an inner layer (thickness: 0.2-0.25 mm) and the same kind of the polyamide (except that conductive carbon black and coupling agent were not added) was used to form an outer layer. This two layer tube was measured for tube moldability (visual examination with the naked eye), and surface resistance of the tube inner layer and resistance to sour gasoline according to the above-described test methods.

Further, on a test piece composed of the above-described polyamide/conductive carbon black/coupling agent composition, mechanical strength and resistance to sour gasoline were measured according to the above-described test methods. The results obtained are shown in Table 1 below. Tube moldability was evaluated by the following standard.

○ The inner surface is smooth.
△: A few melt fracture are generated
X: The inner surface is rough (Many melt fractures are generated).

TABLE 1

| | | Example 1 | Example 2 | Example 3 | Example 4 |
|---|---|---|---|---|---|
| | | Phr | phr | phr | phr |
| Polyamide resin | Nylon 11 | 100 | 100 | 100 | - |
| | Nylon 12 | - | - | - | 100 |
| Conductive carbon black | Ketchen Black EC | - | - | 11 | - |
| | Ketchen Black EC600JD | 6 | 8 | - | 8 |
| Additives | Silane coupling Agent -A | 1 | - | - | - |
| | Silane coupling agent-B | - | 1 | - | - |
| | Silane coupling agent-C | - | - | 1 | - |
| | Silane coupling agent-D | - | - | - | 1 |
| Tube moldability | | ○ | ○ | ○ | ○ |
| Surface resistant value Ω/sq | | $1x10^5$ | $8x10^3$ | $7x10^3$ | $2x10^4$ |
| Initial elongation at break (%) | | 380 | 370 | 310 | 350 |
| Elongation at break (%) after immersion to FC/LPO 5 wt% | | 170 | 200 | 180 | 190 |
| Cracks at edge portion | | none | none | none | none |

EXAMPLES 5 TO 14

Polyamide, conductive carbon black and optionally antioxidant (aromatic secondary amine) in the proportions shown in Table 2 were introduced into a twin screw extruder (manufactured by Kobe Steel Co.) from a hopper, a mixture of aromatic sulfonamide based plasticizer and coupling agent was introduced from a barrel for liquid by a pump, and the resulting mixture was kneaded and extruded to obtain pellets.

Subsequently, a two layer tube was prepared in the same manner as in Examples 1 to 4, and tube moldability (visual examination with the naked eye), and surface resistance and resistance to sour gasoline of the tube inner layer were measured. Further, a test piece composed of the above-described polyamide/conductive carbon black and coupling agent composition was measured on mechanical strength and resistance to sour gasoline according to the above-described test methods.

The results obtained are shown in Table 2 below.

TABLE 2

| | | Example 5 | Example 6 | Example 7 | Example 8 | Example 9 | Example 10 |
|---|---|---|---|---|---|---|---|
| | | phr | Phr | Phr | phr | phr | phr |
| Polyamide Resin | Nylon 11 (unplasticized) | 100 | 100 | 100 | - | 100 | - |
| | Nylon 12 (unplasticized) | - | - | - | 100 | - | 100 |
| Conductive Carbon black | Ketchen Black EC | - | 12 | - | - | 15 | 15 |
| | Ketchen Black EC600JD | 7 | - | 8 | 9 | - | - |
| Plasticizer | BMB* | 16 | 16 | 16 | 16 | 16 | 16 |
| Additives | Silane coupling agent-E | 1 | - | - | - | - | - |
| | Silane coupling agent-F | - | 3 | - | - | - | - |
| | Silane coupling agent-G | - | - | 1 | - | - | - |
| | Titanate-based coupling agent-H | - | - | - | 1 | - | - |
| | Titanate-based coupling agent-I | - | - | - | - | 2 | - |
| | Aluminum-based coupling agent-J | - | - | - | - | - | 3 |
| | silane coupling agent-K | - | - | - | - | - | - |
| Antioxidant | Aromatic secondary amine** | - | - | - | - | - | - |
| Tube moldability | | ○ | ○ | ○ | ○ | ○ | ○ |
| Surface resistant value Ω/sq | | $9x10^4$ | $1x10^4$ | $9x10^3$ | $3x10^4$ | $7x10^3$ | $3x10^4$ |
| Initial elongation at break (%) | | 350 | 320 | 350 | 360 | 290 | 260 |
| Elongation at break (%) after Immersion to FC/LPO 5 wt% | | 170 | 190 | 190 | 190 | 150 | 140 |
| Cracks at edge portion | | none | none | none | none | none | none |

* BMB:n-butylbenzenesulfonamide

** p-(p-toluenesulfonylamide)-diphenylamine

TABLE 2 (continuation)

| | | Example 11 | Example 12 | Example 13 | Example 14 |
|---|---|---|---|---|---|
| | | phr | Phr | Phr | phr |
| Polyamide Resin | Nylon 11 (unplasticized) | 100 | - | 100 | - |
| | Nylon 12 (unplasticized) | - | 100 | - | 100 |
| Conductive Carbon black | Ketchen Black EC | - | - | - | - |
| | Ketchen Black EC600JD | 9 | 9 | 8 | 8 |
| Plasticizer | BMB* | 16 | 16 | 16 | 16 |
| Additives | Silane coupling agent-E | - | - | - | - |
| | Silane coupling agent-F | - | - | - | - |
| | Silane coupling agent-G | 2 | 2 | - | - |
| | Titanate-based coupling agent-H | - | - | - | - |
| | Titanate-based coupling agent-I | - | - | - | - |
| | Aluminum-based coupling agent-J | - | - | - | - |
| | silane coupling agent-K | - | - | 1 | 1 |
| Antioxidant | Aromatic secondary amine** | 1 | 1 | 0.5 | 0.5 |
| Tube moldability | | ○ | ○ | ○ | ○ |
| Surface resistant value Ω/sq | | $4x10^3$ | $3x10^3$ | $5x10^3$ | $8x10^3$ |
| Initial elongation at break (%) | | 330 | 340 | 360 | 360 |
| Elongation at break (%) after Immersion to FC/LPO 5 wt% | | 200 | 210 | 200 | 200 |
| Cracks at edge portion | | none | none | none | none |

* BMB:n-butylbenzenesulfonamide

** p-(p-toluenesulfonylamide)-diphenylamine

COMPARATIVE EXAMPLES 1 TO 6

A two layer tube was prepared in the same manner as in Examples 1 to 4 using polyamide, conductive carbon black and coupling agent in the proportions as shown in Table 3, and this two layer tube was measured on tube moldability (visual examination with the naked eye), and surface resistance and resistance to sour gasoline of the tube inner layer by the above-described test methods were measured. Further, a test piece composed of the above-described polyamide/conductive carbon black and coupling agent composition was measured on mechanical strength and resistance to sour gasoline according to the above-described test methods.

The results obtained are shown in Table 3 below.

TABLE 3

| | | Comparative Example 1 | Comparative Example 2 | Comparative Example 3 | Comparative Example 4 | Comparative Example 5 | Comparative Example 6 |
|---|---|---|---|---|---|---|---|
| | | phr | phr | phr | phr | phr | phr |
| Polyamide resin | Nylon 11 | 100 | 100 | 100 | 100 | 100 | - |
| | Nylon 12 | - | - | - | - | - | 100 |
| Conductive carbon black | Ketchen Black EC | - | 5 | 11 | 18 | 15 | 15 |
| Additives | Silane coupling agent-B | - | - | - | - | 12 | 0.1 |
| Tube moldability | | ○ | ○ | ○ | × | Δ | ○ |
| Surface resistant value Ω/sq | | $2x10^{12}$ | $6x10^{10}$ | $6x10^{3}$ | $3x10^{2}$ | $1x10^{3}$ | $2x10^{4}$ |
| Initial elongation at break (%) | | 410 | 300 | 210 | 150 | 180 | 320 |
| Elongation at break (%) after Immersion to FC/LPO 5 wt% | | 410 | 8 | 8 | 4 | 90 | 60 |
| Cracks at edge portion | | none | observed | observed | observed | none | observed |

As is apparent from the above results, the polyamide resin is inherently a material having excellent mechanical strength and resistance to sour gasoline (Comparative Example 1), but this characteristic greatly deteriorates by the addition of conductive carbon black (Comparative Examples 2 to 4). It is understood that decrease in mechanical strength and resistance to sour gasoline is markedly suppressed by adding the coupling agent according to the present invention (Examples 1 to 14). Further, balanced properties also having excellent moldability can be obtained by adding additives in amounts in the range as defined in the present invention.

EXAMPLE 15

A two layer tube having an outer diameter of 14 mm and having a polyamide/conductive carbon black/coupling agent composition as an inner layer was prepared in the same manner as in Example 1 except that the polyamide of the outer layer was changed to a blend of NBR and polyvinyl chloride, and that vulcanization was conducted after extruding an inner layer and then extruding an outer layer. This tube was inserted in a hole with a 15mm diameter of EPDM-made tube (thickness: 2 mm) to form a two layer tube-protector structure of the present invention.

This cylindrical structure equipped with the protector was confirmed to be useful as a fuel conveyer pipe that withstands external mechanical or thermal impact from outside over a long period of time.

By using a composition obtained by containing conductive carbon black and coupling agent in polyamide according to the present invention, a molded product having excellent moldability, conductivity, fuel oil resistance, resistance to sour gasoline, strength as a mechanical property and the like can be obtained. Therefore, by using the composition according to the present invention as the innermost layer of the tube, a tube suitable for transportation of hydrocarbon fluids such as fuel oils can be obtained.

**Claims**

1. A single-layer or multi-layer conductive resin tube, wherein at least the innermost layer of the said tube is formed from a conductive polyamide composition comprising 100 phr of a polyamide resin, 6 to 15 phr of conductive carbon black and 0.3 to 5 phr of a coupling agent.

2. The conductive resin tube as claimed in claim 1, wherein said conductive polyamide composition comprises 100 phr of a polyamide resin, 7 to 13 phr of conductive carbon black and 0.5 to 3 phr of a coupling agent.

3. The conductive resin tube as claimed in claim 1, wherein said coupling agent is selected from the group consisting of silane coupling agents, titanate coupling agents and aluminum coupling agents.

4. The conductive resin tube as claimed in claim 3, wherein said silane coupling agent is selected from the group consisting of vinyltrichlorosilane, vinyltrimethoxysilane, vinyltriethoxysilane, vinyl tris(β-methoxyethoxy)silane, β-(3,4-epoxycyclohexyl)ethyl trimethoxysilane, γ-glycidoxypropyl trimethoxysilane, γ-glycidoxypropylmethyl diethoxysilane, γ-glycidoxypropyl triethoxysilane, γ-methacryloxypropylmethyl dimethoxysilane, γ-methacryloxypropyl trimethoxysilane, γ-methacryloxypropylmethyl diethoxysilane, γ-methacryloxypropyl triethoxysilane, N-β-(aminoethyl)-γ-aminopropylmethyl dimethoxysilane, N-β-(aminoethyl)-γ-aminopropyl trimethoxysilane, N-β-(aminoethyl)-γ-aminopropyl triethoxysilane, γ-aminopropyl trimethoxysilane, γ-aminopropyl triethoxysilane, N-phenyl-γ-aminopropyl trimethoxysilane, γ-chloropropyl trimethoxysilane, γ-mercaptopropyl trimethoxysilane and γ-ureidopropyl triethoxysilane.

5. The conductive resin tube as claimed in claim 3, wherein said titanate coupling agent is selected from the group consisting of isopropyltrioctanoyl titanate, isopropyltriisostearoyl titanate, isopropyldimethacrylisostearoyl titanate, isopropylisostearoyldiacryl titanate, isopropyltri(N-aminoethyl-aminoethyl)titanate, isopropyltri(dioctylphosphate)titanate, isopropyltris(dioctylpyrophosphate)titanate, isopropyltridodecylbenzenesulfonyl titanate, isopropyltricumylphenyl titanate, tetraisopropylbis(dioctylphosphite)titanate, tetraoctylbis(ditridecylphosphite)tiatanate, tetra(2,2-diallyloxymethyl-1-butyl)bis(ditridecyl)phosphite titanate, bis(dioctylpyrophosphate)oxyacetate titanate and bis(dioctylpyrophosphate)ethylene titanate.

6. The conductive resin tube as claimed in claim 3, wherein said aluminum coupling agent is selected from compounds represented by the following formula:

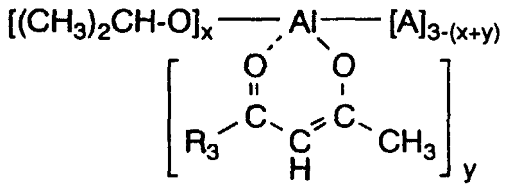

wherein $R_3$ represents an alkoxy group having 1 to 22 carbon atoms or an alkylamino group having 1 to 22 carbon atoms, the alkyl group in the group may be linear or branched chain, A represents

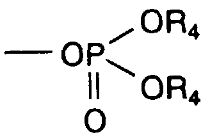 , 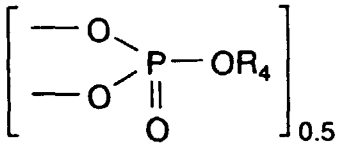 or 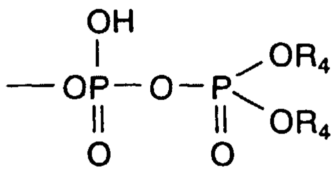

wherein $R_4$ represents an alkyl group having 1 to 18 carbon atoms, and x and y each are 1 or 2, provided that x and y are not simultaneously 2.

**7.** The multi-layered conductive resin tube as claimed in claim 1, wherein an outer layer of the said tube is formed from a material selected from the group consisting of polyamides, epichlorohydrin rubbers, NBR, mixtures of NBR and polyvinyl chloride, chlorosulfonated polyethylene rubbers, chlorinated polyethylene rubbers, acrylic rubbers (ACM), chloroprene rubbers (CR), ethylene-propylene rubbers (EPR), ethylene-propylene-diene rubbers (EPDM), rubber mixtures of NBR and EPDM, vinyl chloride-based thermoplastic elastomers, olefin-based thermoplastic elastomers, ester-based thermoplastic elastomers and amide-based thermoplastic elastomers.

**8.** The conductive resin tube as claimed in claim 1 , wherein the tube is for the transport of fuels.

**9.** A conductive resin tube structure having a protective member formed from rubbers or thermoplastic elastomers arranged on part or the whole of an outer periphery of a single-layer or multi-layer conductive resin tube, wherein at least the innermost layer of the said tube is formed from a conductive polyamide composition comprising 100 phr of a polyamide resin, 6 to 15 phr of conductive carbon black and 0.3 to 5 phr of a coupling agent.

**10.** The conductive resin tube structure as claimed in claim 9, wherein said conductive polyamide composition comprises 100 phr of a polyamide resin, 7 to 13 phr of conductive carbon black and 0.5 to 3 phr of a coupling agent.

**11.** The conductive resin tube structure as claimed in claim 9, wherein said coupling agent is selected from the group consisting of silane coupling agents, titanate coupling agents and aluminum coupling agents.

**12.** The conductive resin tube structure as claimed in claim 11, wherein said silane coupling agent is selected from the group consisting of vinyltrichlorosilane, vinyltrimethoxysilane, vinyltriethoxysilane, vinyl tris(β-methoxyethoxy)silane, β-(3,4-epoxycyclohexyl)ethyl trimethoxysilane, γ-glycidoxypropyl trimethoxysilane, γ-glycidoxypropylmethyl diethoxysilane, γ-glycidoxypropyl triethoxysilane, γ-methacryloxypropylmethyl dimethoxysilane, γ-methacryloxypropyl trimethoxysilane, γ-methacryloxypropylmethyl diethoxysilane, γ-methacryloxypropyl triethoxysilane, N-β-(aminoethyl)-γ-aminopropylmethyl dimethoxysilane, N-β-(aminoethyl)-γ-aminopropyl trimethoxysilane, N-β-(aminoethyl)-γ-aminopropyl triethoxysilane, γ-aminopropyl trimethoxysilane, γ-aminopropyl triethoxysilane, N-phenyl-γ-aminopropyl trimethoxysilane, γ-chloropropyl trimethoxysilane, γ-mercaptopropyl trimethoxysilane and γ-ureidopropyl triethoxysilane.

**13.** The conductive resin tube structure as claimed in claim 11, wherein said titanate coupling agent is selected from the group consisting of isopropyltrioctanoyl titanate, isopropyltriisostearoyl titanate, isopropyldimethacrylisostearoyl

titanate, isopropylisostearoyldiacryl titanate, isopropyltri(N-aminoethyl-aminoethyl)titanate, isopropyltri(dioctylphosphate)titanate, isopropyltris(dioctylpyrophosphate)titanate, isopropyltridodecylbenzenesulfonyl titanate, isopropyltricumylphenyl titanate, tetraisopropylbis(dioctylphosphite)titanate, tetraoctylbis(ditridecylphosphite)titanate, tetra(2,2-diallyloxymethyl-1-butyl)bis(ditridecyl)Phosphite titanate, bis(dioctylpyrophosphate)oxyacetate titanate and bis(dioctylpyrophosphate)ethylene titanate.

**14.** The conductive resin tube structure as claimed in claim 11, wherein said aluminum coupling agent is selected from compounds represented by the following formula:

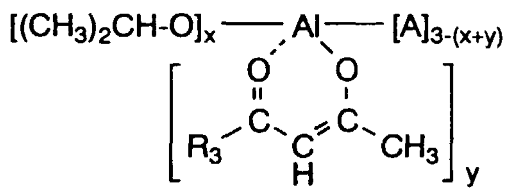

wherein $R_3$ represents an alkoxy group having 1 to 22 carbon atoms or an alkylamino group having 1 to 22 carbon atoms, the alkyl group in the group may be linear or branched chain, A represents

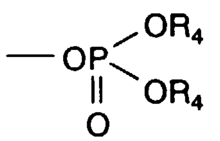 , 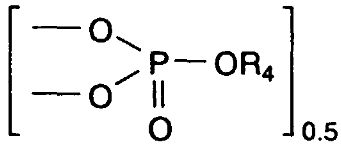 or 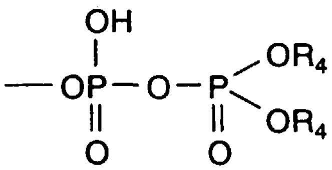

wherein $R_4$ represents an alkyl group having 1 to 18 carbon atoms, and x and y each are 1 or 2, provided that x and y are not simultaneously 2.

**15.** The conductive resin tube structure as claimed in claim 9, wherein the protective member comprises a solid or sponge-like member consisting of ethylene-propylene rubbers or vinyl chloride-based or olefin-based thermoplastic elastomers.

**16.** A conductive polyamide resin composition comprising 100 phr of a polyamide resin, 6 to 15 phr of conductive carbon black and 0.3 to 5 phr of a coupling agent.

**17.** The conductive polyamide resin composition as claimed in claim 16, which comprises 100 phr of a polyamide resin, 7 to 13 phr of conductive carbon black and 0.5 to 3 phr of a coupling agent.

**18.** A molded product comprising the conductive polyamide resin composition as claimed in claim 16.